# EUROPÄISCHE PATENTSCHRIFT

(11) **EP 1 349 736 B1**
(45) Veröffentlichungstag und Bekanntmachung des Hinweises auf die Patenterteilung: **14.06.2006**
(21) Anmeldenummer: 01985384.5
(22) Anmeldetag: 10.12.2001
(51) Int. Cl.: B60B 33/02, B62D 5/04, B60G 3/01, A61G 7/08

(54) **ROLLE**
ROLLER
GALET

(30) Priorität: 12.01.2001 DE 10101480; 08.02.2001 DE 10105614
(43) Veröffentlichungstag der Anmeldung: 08.10.2003
(73) Patentinhaber: Tente GmbH & Co. KG, 42929 Wermelskirchen (DE)
(72) Erfinder: BLOCK, Wolfgang, 42929 Wermelskirchen (DE); MILBREDT, Manfred, 42859 Remscheid (DE)
(74) Vertreter: Müller, Enno
(86) Internationale Anmeldenummer: PCT/EP2001/014465
(87) Internationale Veröffentlichungsnummer: WO 2002/055322

(56) Entgegenhaltungen:
- EP-A- 0 558 108
- DE-A- 4 318 546
- DE-C- 3 839 433
- US-A- 5 439 069

## Beschreibung

Die Erfindung bezieht sich auf eine Rolle, insbesondere Lenkrolle, nach dem Merkmal des Oberbegriffes des Anspruches 1.

Eine über ein Wippenpedal hinsichtlich der Feststellbarkeit der Drehbewegung des Laufrades und der Schwenkbewegung schaltbare Rolle ergibt sich aus der US-PS 5,377,372. Das Pedal erstreckt sich im Zentrum des Untergestelles eines verfahrbaren Bettes. Zu den Rollen hin ergibt sich so eine recht aufwendige Übertragungsmechanik.

Durch die gattungsgemäße DE-A1 43 18 546 ist es bereits bekannt, eine einen Steuernocken der Rolle durchsetzende Betätigungswelle über einen Elektromotor zu steuern. Elektromotor und Getriebe sind so ausgerichtet, dass eine Schubstange ausgefahren wird, die über einen angelenkten Schwenkhebel die Betätigungswelle und damit den Steuernocken dreht, über den die geschilderten Funktionen ausgeübt werden. Auch hier liegt nicht unerheblicher Aufwand vor.

Die Erfindung beschäftigt sich mit der Aufgabe, eine Rolle, wie eingangs vorausgesetzt, baulich einfach und funktionssicher auszubilden.

Diese Aufgabe ist beim Gegenstand des Anspruches 1 gelöst, wobei darauf abgestellt ist, dass der Elektromotor vermittels einer Elektromotor-Welle über ein Verzahnungsgetriebe auf die Betätigungswelle einwirkt, wobei das Verzahnungsgetriebe ein Abtriebszahnrad aufweist, dessen Nabe von der Betätigungswelle durchsetzt ist. Es liegt eine Direkteinwirkung vor. Der bauliche Aufwand ist vergleichsweise gering. Zur Drehmitnahme bzgl. des Steuernockens ist sodann vorgesehen, dass die Betätigungswelle einen Mehrkantquerschnitt aufweist. Ein solcher unrunder Mehrkantquerschnitt ist zweckmäßig ein Sechskant. Entsprechend bzw. bevorzugt weist die Nabe einen an den Mehrkantquerschnitt der Betätigungswelle angepassten Innenquerschnitt auf. Weiter ist realisiert, dass das Verzahnungsgetriebe eine Schnecke aufweist, welche über untersetzende Zwischenzahnräder das Abtriebszahnrad treibt. Der Abgriff der Schnecke kann von zwei Seiten her direkt oder versetzt diametral erfolgen. Das ergibt eine günstige Kraftübertragung ohne Überbeanspruchung; die Kräfte an der Schnecke in Form von gegeneinander gerichteten Radialkomponenten heben sich gleichsam auf. Dabei ist es zusätzlich günstig, dass die Drehachse der Schnecke mit der Drehachse der Elektromotor-Welle fluchtet. Das eröffnet eine gedrungene Bauform. Schaltungstechnisch ist es im Hinblick auf die Funktionen der Rolle günstig, wenn die Betätigungswelle relativ zur Nabe in Längsrichtung der Betätigungswelle des Abtriebszahnrades verschiebbar ist. Das ermöglicht elektromotorseitig Ausrückbewegungen in Bezug auf die Drehmitnahme, bildet also eine günstige Basis für Ausübung oder Abkopplung der Funktionen. Eine baulich vorteilhafte Lösung ergibt sich sodann dadurch, dass eine Betätigungswelle die Steuernocken von zwei distanziert zueinander angeordneten Rollen durchsetzt. Das erbringt eine synchrone Betätigung benachbarter Rollen. Um diesbezüglich alle vier Rollen, bspw. eines Untergestelles eines Bettes, mit einfachen Mitteln schaltsynchron zu erreichen, wird vorgeschlagen, dass zwei Betätigungswellen parallel zueinander angeordnet sind, die über ein Getriebe zur gleichzeitigen Schaltbetätigung von drei oder mehr Rollen durch einen Elektromotor gekoppelt sind. Das entsprechende Schaltorgan kann sich in Form einer Schubstange verkörpern. Weiter ist motormäßig berücksichtigt, dass der feststehende Elektromotor eine sich rechtwinklig zur Ebene der Betätigungswelle erstreckende Elektromotor-Welle aufweist. Letztere bestimmt in der Regel auch die in dieser Richtung liegende längliche Gestalt des ganzen Gehäuses. Diese im Sinne einer zeigerartigen Zuordnung gewählte Anwendung hat zugleich grundlegende Bedeutung für zusätzliche Funktionen, dies um so mehr, als der Wickelbereich (Statorwicklung) des Elektromotors in Handbreitenabstand zu der Betätigungswelle angeordnet ist. Das gibt dem Elektromotor den Status einer Handhabe, indem weiter so vorgegangen ist, dass ein in den Wickelbereich übergehendes Gehäuse des Elektromotors freikragend griffartig ausgebildet ist. Er läßt sich nach Freigabe drehen, und damit als Schalthebel für die unterschiedlichen Funktionen benutzen. Daher ist es auch günstig, wenn der Elektromotor einem Stirnende der Betätigungswelle zugeordnet ist. Für eine gute Betätigungszugänglichkeit erweist es sich als nützlich, dass der Elektromotor bezüglich bspw. einer Anordnung in einem Krankenbett bettaußenseitig zu einer Rolle angeordnet ist. Gemeint ist der vom Bettrahmen bestimmte Grundriss des Bettes, respektive Krankenbettes. Um andererseits eine exponierte Lage des Elektromotors zu vermeiden, wird vorgeschlagen, dass der Elektromotor bezüglich einer Anordnung in einem Krankenbett bettinnenseitig zu einer Rolle angeordnet ist. Sowohl die Zuordnung als auch die angeschnittene Untersetzung erlauben zudem eine Funktion von eigenständiger Bedeutung, indem der Elektromotor zur Notbetätigung mit der Betätigungswelle drehbar angeordnet ist. Mit anderen Worten: Das Verzahnungsgetriebe des Elektromotors ist vom Abtriebszahnrad her selbsthemmend. Zur Ausübung der Notbetätigung bedarf es einer willensbetonten Freigebung der Schwenkbarkeit des Elektromotors. Entsprechend ist zur Notbetätigung eine Festlagerung desselben aufhebbar. Hierzu ist das Untergestell des Krankenbettes herangezogen. Diese Vorkehrung ist solcher Art, dass zur Festlagerung ein in einer Festlagerbohrung eingreifender Federstift vorgesehen ist. Die Freigabe beschränkt sich auf das Ziehen des Federstiftes, welcher so die Festlagerbohrung verläßt und in Gegenrichtung einschnäppernd wieder in die Festlagerbohrung eintritt. Die Ausübung der Funktionen der Rolle wird über sensorgesteuerte elektrische Wirkweisen herbeigeführt. Dazu ist vorgesehen, dass an der Betätigungswelle, umfangsmäßig verteilt, Positionsgeber angeordnet sind, die berührungslos über einen Positionserfasser zur Detektierung einer Schaltposition der Betätigungswelle treten. Die Positionsgeber sich dabei als Magnet ausgebildet. Die Positionserfasser hingegen werden von Näherungsschaltern gestellt. Montagetechnisch vorteilhaft ist es dabei, wenn die Positionserfasser in einer gemeinsamen Platine untergebracht sind. Der hoch untersetzte Elektromotor erlaubt geringe, definierte Winkelbewegungen. Angesichts der Funktionen Lenkblockierung (Richtungsfeststellung), Freigabestellung, Brems- und Lenkblockierung (Totalblokcierung) ist es günstig, wenn drei Positionsgeber vorgesehen sind und diese innerhalb eines Umfangsbereichs, abdeckend den gesamten Drehwinkel, von 180° oder weniger angeordnet sind. Weiter erweist es sich als vorteilhaft, dass zwei oder mehr, bevorzugt alle Rollen zur gemeinsamen Betätigung vorgesehen sind und dass jeder Rolle eine eigene Betätigungswelle und ein eigener Elektromotor zugeordnet ist, wobei die Betätigung der Elektromotor über eine zentrale Steuereinheit erfolgt, die mit jedem der Elektromotoren in Wirkverbindung steht. Zurückkommend auf die Positionsgeber ist es baulich günstig, dass diese über die Länge der Betätigungswelle mit Abstand zueinander angeordnet sind. Gemeint ist ein relativ kurzes Stück der Länge der Betätigungswelle. Zuordnungsmäßig kommt man praktisch mit einem geringeren Kreisabschnitt aus, denn die drei Positionsgeber sind gemäß nachfolgend beschriebenem Ausführungsbeispiel innerhalb eines Umfangsbereichs von 90° angeordnet, reduzierbar sogar auf 60°. Eine Variante der Mittel der Notauslösung verkörpert sich sodann noch darin, dass die Betätigungswelle über ihre Länge neben einem Eingreifabschnitt, mit welchem das Verzahnungsgetriebe zusammenwirkt, einen Freigangabschnitt aufweist und dass die Betätigungswelle in ihrer Längsrichtung relativ zu dem Verzahnungsgetriebe verschiebbar ist, so dass zur Notbetätigung der Freigangabschnitt dem Verzahnungsgetriebe zuordbar ist. Eine noch einfachere Lösung besteht darin, dass ein Stirnende der Betätigungswelle mit einem Handbetätigungsgriff ausgestattet ist. Das Ausrücken geschieht dabei dergestalt, dass die Betätigungswelle vermittels des Handbetätigungsgriffes gegen Federkraft axial bewegbar ist.

Sodann betrifft die Erfindung weiter eine Rolle nach den Merkmalen des Oberbegriffs des Anspruchs 1 oder insbesondere danach, wobei weiter ein Steuergerät und ein Akkumulator vorgesehen sind, welche Lösung dadurch gekennzeichnet ist, dass die Stromversorgung des Steuergerätes durch den Akkumulator schaltbar ist und dass nach erfolgter, über das Schaltgerät auszulösender Betätigung der Rolle das Schaltgerät vollständig die Stromverbindung zum Akkumulator unterbricht. Zudem ist berücksichtigt, dass zur Durchführung einer Betätigung der Rolle vermittels des Schaltgerätes eine gesonderte Aktivierung der Stromversorgung des Schaltgerätes durchzuführen ist. Mit Aktivierung der Stromversorgung des Schaltgerätes erfolgt eine Anzeige des Betätigungszustandes der Rolle. So ist jeweils die aktuelle Funktion erkennbar und entsprechend auch die neue Funktion. Schließlich bringt die Erfindung in Vorschlag, dass die Schalteinheiten des Schaltgerätes auf einer gemeinsamen Platine angeordnet sind, welche Schaltplatine gegebenenfalls auch in eine vorhandene Schalteinheit des Krankenbettes integrierbar ist. Endlich ist vorgesehen, dass die Positionserfasser über die Länge der Betätigungswelle mit Abstand zueinander angeordnet sind.

Der Gegenstand der Erfindung ist nachstehend anhand eines zeichnerisch veranschaulichten Ausführungsbeispieles näher erläutert. Es zeigt:
- Fig. 1: in perspektivischer Darstellung ein verfahrbares Krankenbett unter Verwendung der erfindungsgemäßen Rollen, wobei eine mit einem Elektromotor bestückt ist,
- Fig. 2: eine perspektivische Unteransicht des einen Endes des Untergestelles des Krankenbettes,
- Fig. 3: gleichfalls in schaubildlicher Wiedergabe den Elektromotor, einem mit dem Untergestell verbindbaren Träger zugeordnet,
- Fig. 4: den anderseitigen Träger mit einer Walze, welcher Positionsgeber zugeordnet sind,
- Fig. 5: eine Draufsicht auf die zugehörigen Positionserfasser tragende Platine,
- Fig. 6: einen Vertikalschnitt durch die Rolle in Lenkblockierungsstellung,
- Fig. 7: die diese Position optisch wiedergebende Frontplatte eines Steuergeräts in Schalterbetätigung,
- Fig. 8: einen Schnitt wie Fig. 6, die Freigabestellung zeigend,
- Fig. 9: die diese Position optisch wiedergebende Frontplatte des Steuergeräts in Schalterbetätigung,
- Fig. 10: einen Schnitt wie Fig. 6, die Brems- und Lenkblockierung der Rolle zeigend,
- Fig. 11: die diese Position optisch wiedergebende Frontplatte des Steuergeräts in Schalterbetätigung,
- Fig. 12: die Draufsicht auf die Rolle mit in Festlagerung befindlichem Elektromotor,
- Fig. 13: eine Ansicht gegen die Rolle bei partiell aufgebrochenem Getriebegehäuse,
- Fig. 14: einen Vertikalschnitt durch das Abtriebszahnrad mit Betätigungswelle,
- Fig. 15: eine der Fig. 14 entsprechende Darstellung bei ausgerückter Betätigungswelle und
- Fig. 16: ein die Schaltwirkung übertragendes Getriebe, weitestgehend schematisiert.

Die erfindungsgemäße Rolle 1 ist als Lenkrolle ausgebildet und den vier Ecken eines Fahrwerks zugeordnet. Beim dargestellten Ausführungsbeispiel handelt es sich um ein Untergestell 2 eines Krankenbettes 3.

Das Untergestell 2 steht über Säulenstücke 4 mit einem Bettrahmen 5 in Verbindung. Der schließt kopf- und fußseitig mit vertikal aufragenden Borden 6 ab.

Der Bettrahmen 5 kann gegliedert sein, so dass Rahmenteile zueinander ver- und feststellbar sind, bspw. zur Erlangung bestimmter Liegeprofile (diese Mittel sind nicht dargestellt).

Das Untergestell 2 ist aus Kastenprofilen zusammengesetzt. Das Kastenprofilmaterial stellt eine längsmittig verlaufende Traverse 7 als T-Steg und diese endseitig vor Kopf querende Ausleger 8, stellend die T-Schenkel.

Die Rollen 1 sind den freien Enden der Ausleger 8 über einen horizontal einsteckbaren Träger 9 zugeordnet. Die Steckverbindung ist reversibel und querstiftgesichert. Der Steckvorsprung trägt das Bezugszeichen 10. Er ist um die Wandungsdicke des Kastenprofils abgesetzt und im übrigen auf den lichten Querschnitt desselben abgestimmt und daher richtungsstabil, d. h. drehgesichert. Die durch Wandungsversatz gebildete Schulter 9' zwischen Träger 9 und Steckvorsprung 10 fungiert als Steckbegrenzung.

Von der Unterseite des Trägers 9 geht eine schwenkgelagerte Radgabel 11 aus. An der ist ein Laufrad 12 verachst. Die Radgabel 11 mit zur Verfahrfläche 13 gehendem Radvorsprung begründen einen frei zugänglichen Unterflurbereich 14 des Untergestells 2. Die erreichte Höhe ist z. B. für Bodenpflegetätigkeit ausreichend.

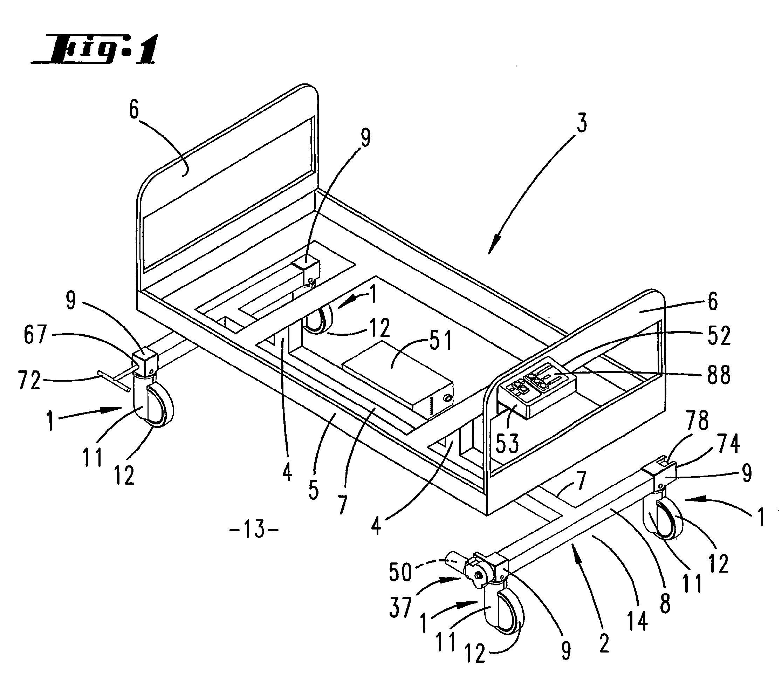

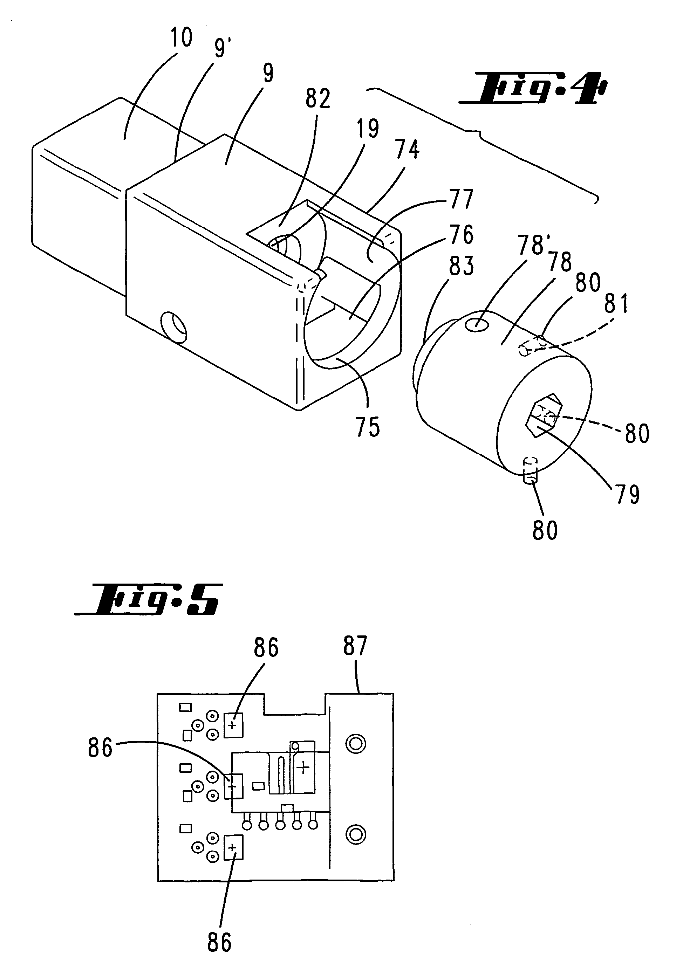

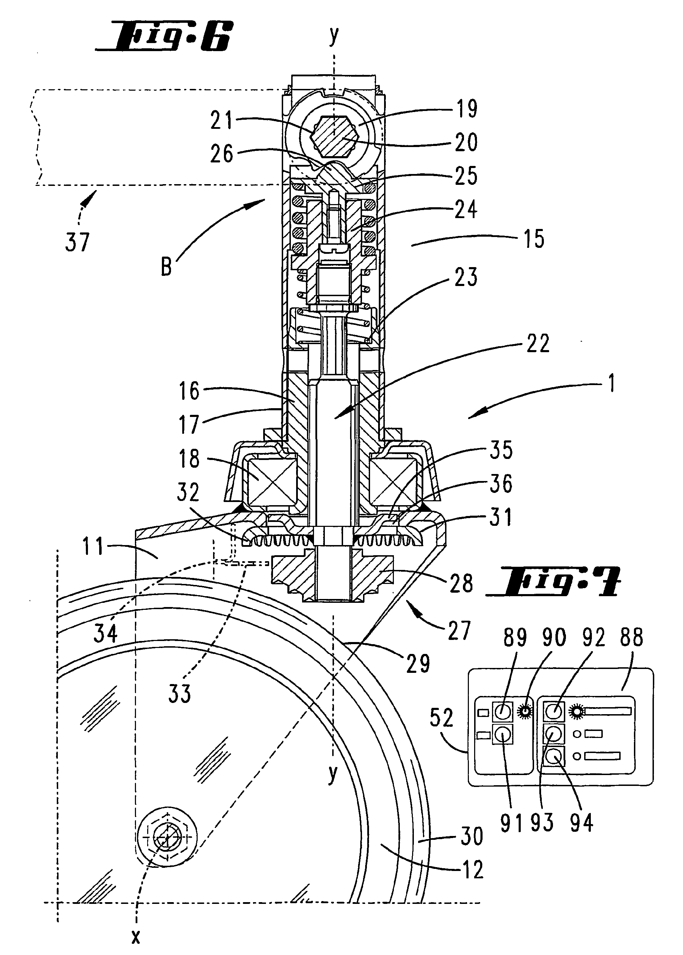

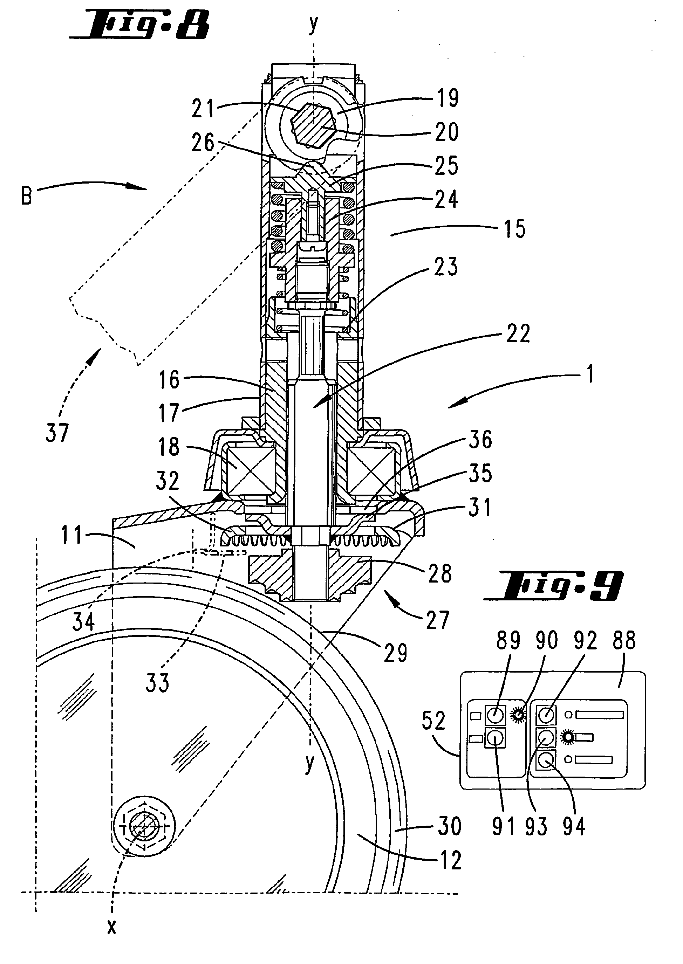

Die Rolle 1, wie bspw. aus den Fig. 6, 8 und 10 ersichtlich, setzt sich oberseitig in einen vertikal ausgerichteten Überbau 15 fort. Eine solche Rolle 1 ist Gegenstand der DE-A1 44 12 603 und soll hier zur Erläuterung der technischen Funktionen beschrieben werden. Gleichwohl kann diese Rolle gedrungener ausgebildet sein beziehungsweise ist dies sogar erstreckt, so dass die entsprechende Mechanik im Träger 9 gehäusemäßig unterkommt (vergleiche z.B. Figur 1). Die Rolle ist durch eine Halteschraube gesichert. Das Schraubloch im Träger 9 ist der Zeichnung entnehmbar.

Die die Funktionen, dargestellt in den Fig. 6, 8 und 10, ausübende Rolle 1 ist zur Ermöglichung der Schwenkbewegung des Laufrades 12, respektive der Radgabel 11, vertikal achsenversetzt zur horizontalen Laufrad-Achse x gelagert. Die vertikale Achse ist mit y bezeichnet.

Vom Radgabel-Grund geht, nach oben führend, ein vertikal ausgerichteter Tragzapfen 16 aus. Letzterer ist von einer Hülse 17 umgeben, die in einer Aufnahme des Trägers 9 befestigt ist. Es handelt sich um eine drehfeste Zuordnung. Das Gehäuse des Trägers 9 kann auch selbst Hülsenfunktion übernehmen.

Unter Zwischenschaltung eines Kugellagers 18 ist die Radgabel 11 demgegenüber rotierfähig, so dass die erwähnte Schwenkbewegung des Laufrades 12 gegeben ist.

Das obere Ende der Hülse 17, gegebenenfalls unmittelbar des Trägers 9, nimmt einen quer zur Vertikalen ausgerichteten Steuernocken 19 auf. Dessen Zentrum durchsetzt eine Betätigungswelle 20. Letztere weist Mehrkantquerschnitt auf. Dargestellt ist ein hexagonaler Querschnitt. Der Durchgangsquerschnitt 21 des Zentrums ist darauf abgestimmt, also sechskäntig.

Im Inneren des hohl ausgebildeten Tragzapfens 16 führt sich vertikal, aber drehgesichert, ein Stößel 22. Der wird bei Drehverlagerung des Steuernockens 19 in Richtung des Laufrades 12 verlagert. Das geschieht entgegen der Kraft einer Druckfeder 23. Die fungiert als Rückholfeder. Die Druckfeder wirkt gegen ein mit dem Stößel 22 schraubverbundenes Schiebestück 24.

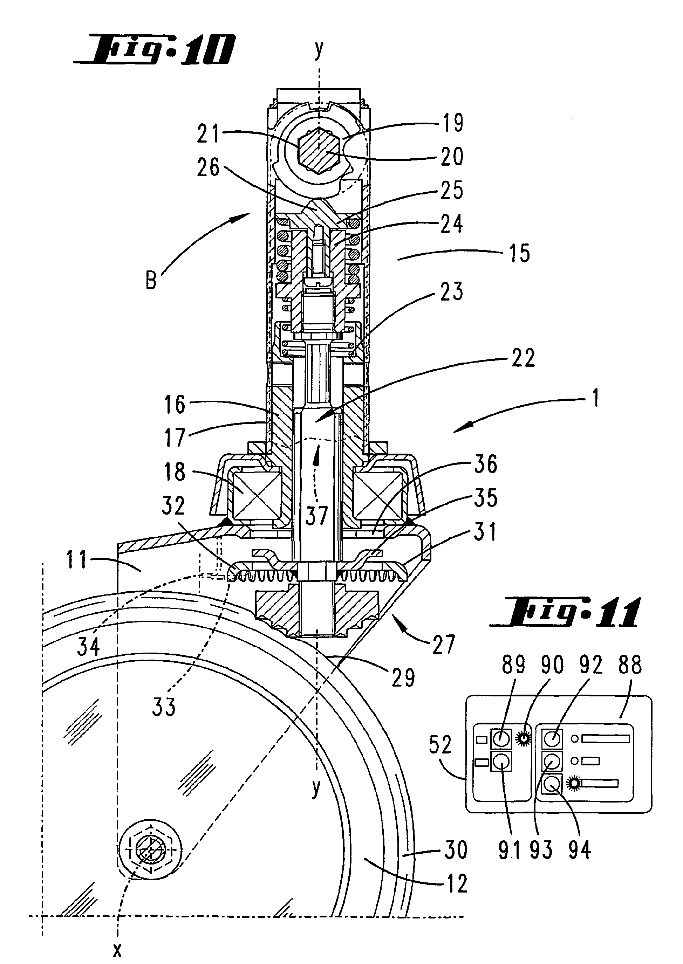

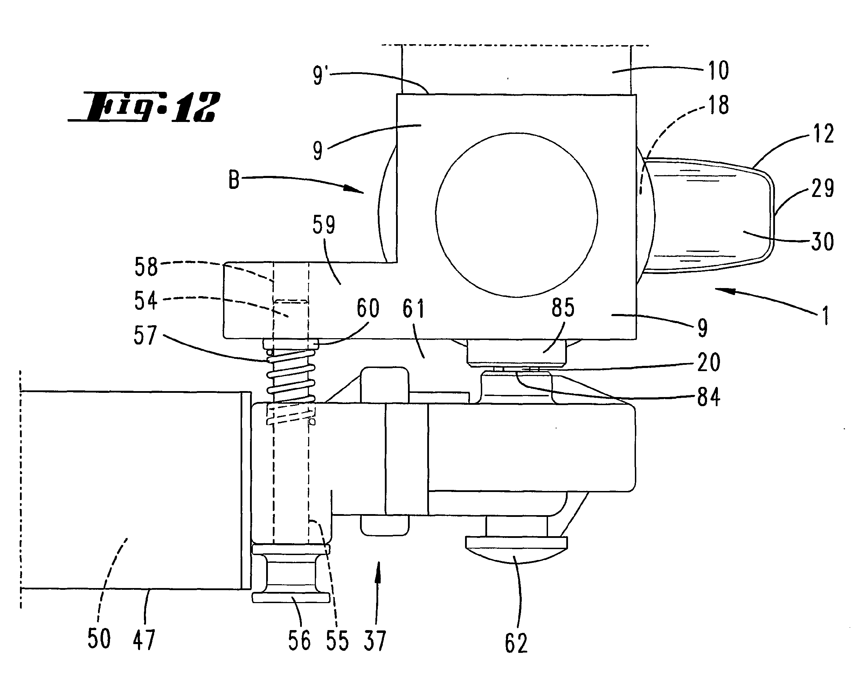

Die Oberseite des Schiebestücks 24 schließt mit einem Teller 25 ab. Letzterer greift mit einem Zahn 26 den nockenkonturierten Umfang des Steuernockens 19 ab. Der Zahn 26 trifft erkennbar auf unterschiedlich tiefe Lücken und auf einen kreisrunden Bogenabschnitt des Steuernockens 19. Diesen abtastend, kommt es über die in Fig. 8 dargestellte Grundstellung hinaus zu einer Blockierung der Drehbeweglichkeit des Laufrades 12 und/oder der Schwenkbewegung des Laufrades 12, genauer der Radgabel 11. Die besagten Stellungen sind jeweils definiert durch die kopfseitige Abstützung.

Zwischen dem Teller 25 der geschilderten Betätigungsvorrichtung B und dem durch die Druckfeder 23 in Richtung des Tellers 25 belasteten Schiebestück 24 befindet sich ein als Schraubengang-Druckfeder realisierter Kraftspeicher mit zentralen Gewindestellmitteln. Hierüber läßt sich der Eindrückwiderstand der Bremsmittel einstellen. Diese Mittel sind aber nicht Gegenstand der vorliegenden Anmeldung. Sie lassen sich detailliert aus der DE-A1 44 12 603 entnehmen.

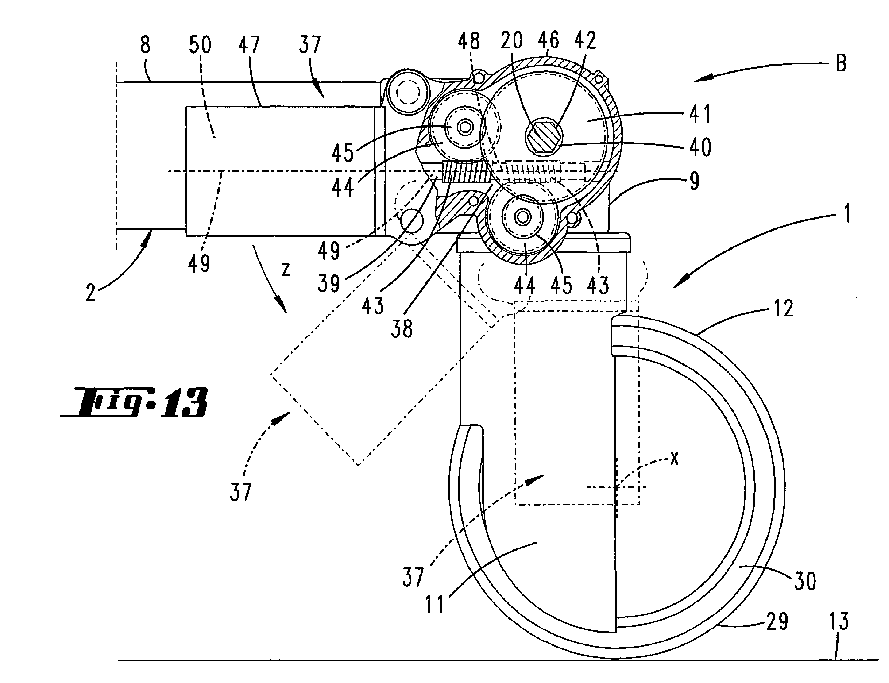

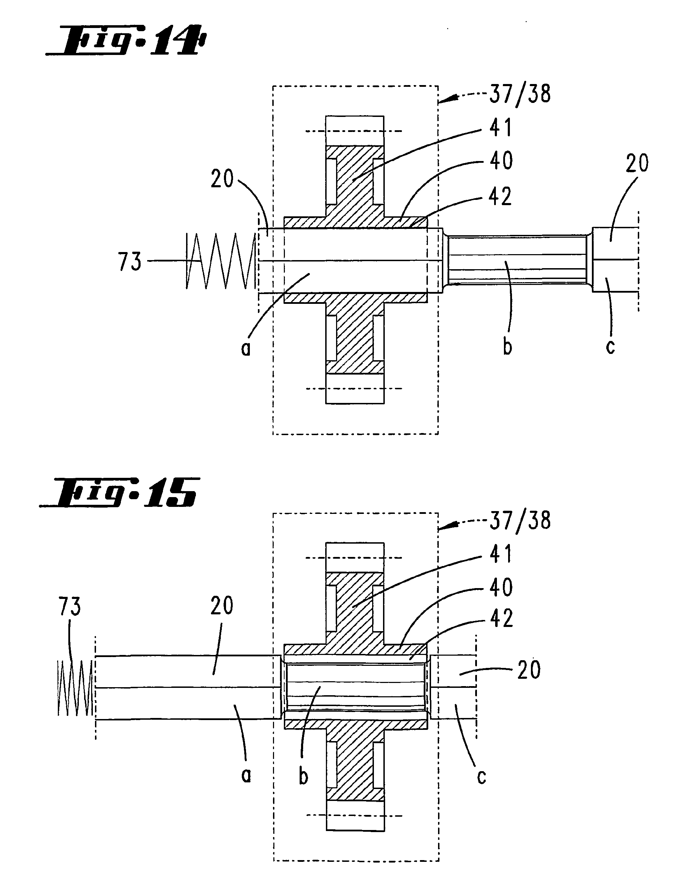

Am unteren Ende des Stößels 22 befindet sich eine als Ganzes mit 27 bezeichnete Bremseinrichtung. Zum Stoppen des Laufrades 12 greift ein am unteren Ende des Stößels 22 sitzendes Bremsteil 28 in die Lauffläche 29 eines elastischen Reifens 30 des Laufrades 12 ein. Es sei auf Fig. 10 verwiesen.

Zur Blockierung der Schwenkbewegung der Radgabel 11 dient ein hinter dem Bremsteil 28 installierter Zahnkranz 31. Letzterer sitzt undrehbar am vertikal verlagerbaren Stößel 22. Seine nach unten weisenden Zähne 32 wirken mit Zahnlücken 33 eines federfähigen Sperrgliedes 34 der Radgabel 11 zusammen, welches ein Einfedern der Zähne 32 in die besagten Lücken erlaubt. In diese Zahnlücken 31 eintretend, wird also einhergehend mit dem Abstoppen der Drehbewegung des Laufrades 12 zugleich die Schwenkbewegung der Radgabel 11 blockiert.

Andererseits läßt sich aber auch die Schwenkbewegung der Radgabel 11 alleine blockieren, da oberseitig des Zahnkranzes 31 Sperrvorsprünge 35 sitzen, die in passende Vertiefungen 36 des Gabelgrundes einrastbar sind. In dieser Situation nimmt der Stößel 22 seine höchstmögliche Verlagerungsstellung ein. Es sei auf Fig. 6 verwiesen.

Herzstück der Betätigungsvorrichtung B ist ein Elektromotor 37. Der Elektromotor 37 weist ein hoch untersetztes Verzahnungsgetriebe 38 auf. Das steht in Direkteinwirkung zur mit dem Steuernocken 19 drehfest verbundenen Betätigungswelle 20.

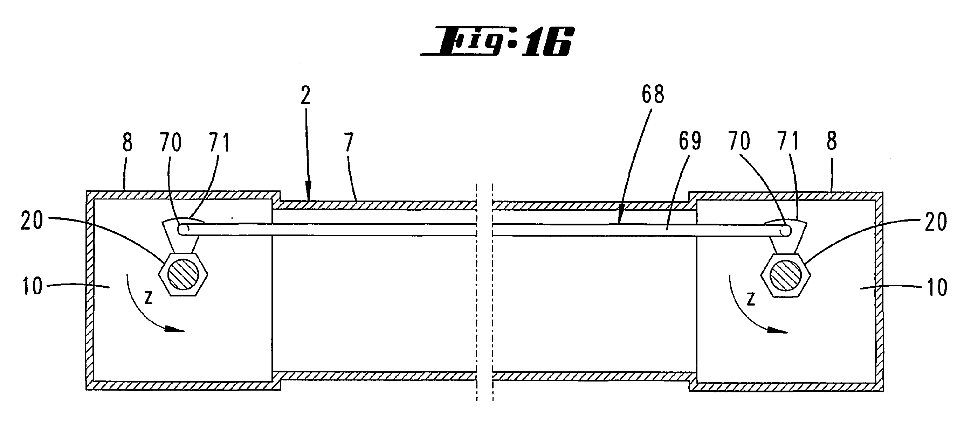

Wie Fig. 12 besonders deutlich entnehmbar, wirkt der Elektromotor 37 vermittels einer Elektromotor-Welle 39 über das Verzahnungsgetriebe 38 auf das dortige, entsprechend gegenüber dem Träger 9 freikragende Ende der Betätigungswelle 20 ein. Das Ende, respektive Stirnende der Betätigungswelle 20 weist den gleichen beschriebenen Mehrkantquerschnitt wie der Durchgangsquerschnitt 21 auf. Die Betätigungswelle 20 durchsetzt dabei die stabile, beidseitig axial abgestützte Nabe 40 eines Abtriebszahnrades 41 des Verzahnungsgetriebes 38. Der mit dem Durchtrittsquerschnitt 21 höhlungsmäßig identische Innenquerschnitt der Nabe 40 trägt das Bezugszeichen 42. Zur Nabe 40 hin kann es sich um eine, in der axialen Richtung gesehen, liegende Festverbindung handeln oder aber um eine verschiebliche Zuordnung zum Abtriebszahnrad 41 hin. Letztere ist bevorzugt.

Das Antriebselement des Elektromotors 37 ist eine Schnecke 43. Der ist ein Zwischenzahnrad 44 zugeordnet, entsprechend realisiert als Schneckenrad. Das Zwischenzahnrad 44 wirkt über ein durchmesserkleineres Zahnrad 45 auf das Abtriebszahnrad 41 ein, welches den größten Durchmesser aufweist.

Das Verzahnungsgetriebe 38 enthält das Zwischenzahnrad 44 in paariger Zuordnung. Die Bezugszeichen sind sinngemäß angewandt. Entsprechend liegt auch eine weitere Schnecke 43 vor. Die Steigungsrichtung der Schnecken 43 ist gegenläufig, also richtungsmäßig gewahrt. Erkennbar liegen die Zwischenzahnräder 44 seitlich einander versetzt gegenüberliegend zur Elektromotor-Welle 39. So sind belastungsmäßig günstige, da verteilt, Krafteinleitungszentren gegeben. Die Elektromotor-Welle 39 ist gegenläufig seitenabgestützt. Das Untersetzungsverhältnis liegt bei 210 : 1. Die Versorgungsspannung beträgt 12 V.

Ein die Innenbauteile des Verzahnungsgetriebes 38 umschließendes Getriebegehäuse 46 schließt in Fig. 12 nach links gehend an ein Gehäuse 47 des Elektromotors 37 an. Insgesamt liegt ein stabartiger Grundkörper vor. Das ist schon wesentlich begründet durch die praktisch längsmittig verlaufende Drehachse 48 der Schnecke 43 bzw. integralen Schnecken 43, die (48) mit der Drehachse 49 der Elektromotor-Welle 39 fluchtet. Die geometrischen Achsen verlaufen koaxial und räumlich unterhalb der geometrischen horizontalen Achse der Betätigungswelle 20. Statt eines Verlaufs unterhalb der Ebene der Betätigungswelle 20 kann die Elektromotor-Welle 39 sich auch in der Ebene der besagten Betätigungswelle 20 erstrecken. Letztere stellt einen Drehpunkt für den nach links freikragenden Gesamtkörper Elektromotor/Verzahnungsgetriebe 37/38. Verzahnungsgetriebe 38 und Elektromotor 37 können auch in ein Gesamtgehäuse eingebaut sein.

Der Elektromotor 37, also im Wesentlichen der Wickelbereich 50 des Elektromotors 37 (Stator und Rotor), erstreckt sich gut in Handbreitenabstand zu der Betätigungswelle 20, an deren freiem Ende das Ganze befestigt drehmitnehmend angedockt ist. Besagter, gehäusebemantelter Wickelbereich 50 ist von handumgreifbarer, im Wesentlichen zylindrischer Gestalt. Das in den Wikkelbereich 50 übergehende Gehäuse 47 des Elektromotors 37 läßt sich so als freikragender Griff benutzen, so dass hierüber eine Notbetätigung der Rolle 1 bzw. Rollen 1 eröffnet ist. Nähere Ausführungen hierüber folgen weiter unten.

Im Hinblick auf die griffbildende Zuordnung ist die Befestigung des Elektromotors 37 am Stirnende der Betätigungswelle 20 so vorgenommen, dass der in seiner Grundstellung fluchtend zur Traverse 7 ausgerichtete, mit dem Untergestell 2 verbundene Elektromotor 37 ausrichtungsmäßig eine sich rechtwinklig zur Ebene der Betätigungswelle 20 erstreckende Ausrichtung innehat. Die ist praktisch identisch mit der Elektromotor-Welle 39.

Je nach den eckpunktbestimmenden Maßen des Untergestells 2 gegenüber dem Bettrahmen 5 kann bezüglich der räumlichen Lage der Rolle 1 bzw. Rollen 1 die Zuordnung so sein, dass der Elektromotor 37 bezüglich bspw. einer Anordnung in einem Krankenbett 3 bettaußenseitig zu einer Rolle 1 angeordnet ist. Andererseits läßt sich aber auch eine Zuordnung dergestalt anwenden, dass der Elektromotor 37 bezüglich bspw. einer Anordnung in einem Krankenbett 3 bettinnenseitig zu einer Rolle 1 angeordnet ist.

Über den Elektromotor 37 lassen sich die in den Fig. 6, 8 und 10 wiedergegebenen Funktionen mit Hilfe einer Steuerung über Sensoren bewirken. Als bordeigene Kraftquelle des Krankenbettes 3 kann ein Akkumulator 51 dienen. Der ist auf einer Konsole, ausgehend von der Traverse 7 des Untergestells 2, getragen sowie befestigt. Den netzunabhängigen Stromleitungsanschluss legt man zweckmäßig unter Nutzung der Hohlräume der Hohlprofile des Untergestells 2.

Das zugehörige Steuergerät 52 befindet sich an einer Außenseite eines der Borde 6 des Krankenbettes 3. Es ist ebenfalls auf einer Konsole getragen, die das Bezugssymbol 53 aufweist.

Fällt die Kraftquelle aus, bspw. infolge erschöpfter Ladung des Akkumulators 51, so sind die beschriebenen Funktionen dennoch ausübbar, indem der Elektromotor 37 als die Betätigungswelle 20 drehmitnehmender Schalthebel oder -arm genutzt wird. Hierüber kommt es zum funktionsbestimmenden Verdrehen des Steuernockens 19 der Rolle 1. Es ist also die Gegebenheit genutzt, dass der Elektromotor 37, eben zur geschilderten Notbetätigung, mit der Betätigungswelle 20 drehbar am Untergestell 2 bzw. Träger 9 angeordnet ist. Vom gleichsam einen Schraubschlüssel stellenden Abtriebszahnrad 41 des Verzahnungsgetriebes 38 geht kein reversibler Lauf aus. Aufgrund des geschilderten Untersetzungsverhältnisses liegt ein selbsthemmendes Verzahnungsgetriebe 38 des Elektromotors 37 vor.

Um jedoch die entsprechend um die geometrische horizontale Achse der Betätigungswelle 20 gehende Schwenkbewegung des griffbildenden Gehäuses 47 des Elektromotors 37 einschließlich eines Abschnitts des Getriebegehäuses 46 schwenken zu können, bedarf es der willensbetonten Freigabe dieser in Richtung des Pfeiles z gehenden Schwenkbewegung. Zur Notbetätigung ist nämlich zuvor eine Festlagerung dieser Einheit 46/47 aufzuheben.

Baulicher Bestandteil einer solchen Festlagerung ist ein raumparallel zur Betätigungswelle 20 verlaufender Federstift 54. Der lagert in einer Führungsaufnahme 55 des Getriebegehäuses 46. Räumlich befindet er sich im Übergangsbereich zwischen besagtem Gehäuse 46 und dem Gehäuse 47 des Elektromotors 37. Sichtseitig endet er als taillierter Zugknopf 56. Die den Federstift 54 belastende Feder 57 ist als Druckfeder realisiert.

Die Feder 57 belastet den Federstift 54 freigebend überwindbar in Richtung einer Festlagerbohrung 58. Letztere erstreckt sich kongruent zur Führungsaufnahme 55 und ist in einem seitlichen Vorsprung 59 des Trägers 9 ausgebildet. Erkennbar wirkt die Feder 57 gegen einen Ringbund 60 am Fuß des Federstifts 54. Das Federwiderlager befindet sich an der dem Träger 9 zugewandten Innenseite des Getriebegehäuses 46. Hier kann eine vertiefende Ringstufe greifen.

Der durch den Federstift 54 bzw. sein verlängertes Schaftende überbrückte Spalt zwischen Träger 9 und Getriebegehäuse 46 ist mit 61 bezeichnet. Dieser Spalt 61 ist auch von dem durch das Abtriebsrad 41 drehsicher gefassten Ende der Betätigungswelle 20 gequert.

Eine Befestigungsvorrichtung zur abzugssicberen Halterung der Einheit Elektromotor/Getriebe ist mit 62 bezeichnet. Sie läßt sich aus Demontagegründen willensbetont jedoch lösen.

Nach dem die Schwenkbarkeit des Elektromotors 37 freigebenden Ziehen des Zugknopfes 56 oder auch vorher, ist es auf Grund ausreichend bemessener Kabellänge nicht nötig, die Kabelverbindung zur elektrischen Ausrüstung aufzuheben, d. h. einen Kontaktstecker 63 zu lösen, dessen Elektrokabel 64 zum Elektromotor bzw. Wickelbereich 50 desselben führt. Der am seitlichen Vorsprung 59 ausgebildete, horizontale Steckschacht trägt das Bezugszeichen 65. Er nimmt Anschluss an einen Leitungsgraben 66 der trotz querschnittsfüllender Gestalt des Steckvorsprungs 10 entsprechende Kabeldurchführungen im Inneren des Kastenprofils des Untergestells 2 erlaubt.

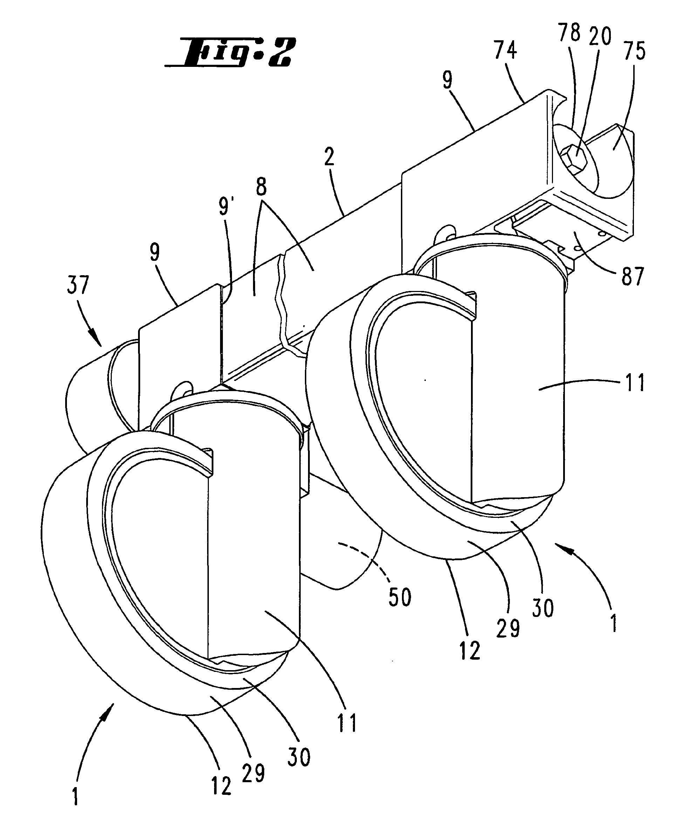

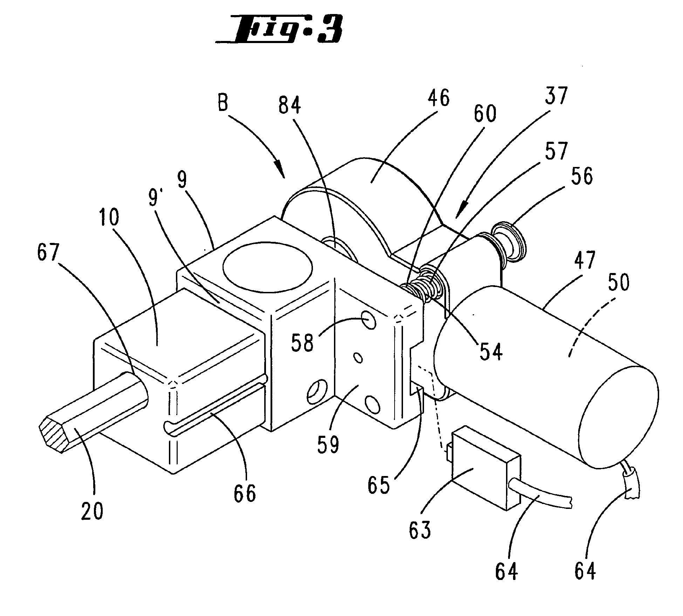

Aus Fig. 3 geht auch deutlich hervor, dass der Träger 9 einschließlich des Steckvorsprungs 10 zum Einziehen der Betätigungswelle 20 präpariert sind, und zwar in Form eines horizontalen Lagerauges 67 im lichten Durchmesser der Spitzenweite des Sechskants der Welle 20.

Unter Nutzung der Stromquelle in Form des Akkumulators 51 und des Steuergeräts 52 lassen sich alle vier Rollen 1 mit je einem Elektromotor 37 der geschilderten Art bestücken einschließlich der Ausstattung zur Notbetätigung.

Die Zeichnung zeigt jedoch eine Möglichkeit auf dergestalt, dass die Betätigungswelle 20 über nur einen Elektromotor 37 zugleich zwei nebeneinanderliegende Rollen 1 eines gemeinsamen Auslegers 8 bedient. Dazu durchsetzt eine entsprechend lang gemessene Betätigungswelle 20 die Steuernocken 19 zwei distanziert zueinander angeordneter Rollen 1 in Form von Lenkrollen. Entsprechend weist auch das dem Elektromotor 37 abgewandte Ende des Auslegers 8 einen ein Lagerauge 67 besitzenden Träger 9 auf. Hinsichtlich des Steckvorsprungs 10 liegt Baugleichheit vor. Ansonsten sind weiterbildende Maßnahmen getroffen, die weiter unten erläutert werden.

Um jedoch alle vier Rollen 1 über einen Elektromotor 37 steuerbar zu machen, ist auch der in Fig. 1 hinten, d. h. linksseitig liegende Ausleger 8 wie geschildert ausgerüstet. Unter Nutzung der Traverse 7 ist ferner ein Getriebe 68 ausgebildet, bestehend aus einer Schubstange 69. Die greift endseitig über Gelenkstellen 70 an je einem Hebelarm 71 der Betätigungswelle 20 an. Über ein solches Getriebe 68 lassen sich demgemäß unter Verwendung zweier Betätigungswellen 20 zur gleichzeitigen Schaltbetätigung drei oder mehr Rollen 1 durch einen Elektromotor 37 synchron in die jeweiligen Funktionen bringen.

Im Zuordnungsbereich des Hebelarmes 71 kann ein weiteres Stützelement mit Lagerauge vorgesehen sein.

Die in einer weiteren Version anfallenden Träger 9 übernehmen insoweit gleichsam Adapterfunktion.

Alternativ kann auch im Hinblick auf die angeschnittene Notbetätigung so vorgegangen werden, dass ein Stirnende der Betätigungswelle 20 mit einem Betätigungsgriff ausgestattet ist. Ein solcher ist in Fig. 1 dargestellt und mit 72 bezeichnet. Das dortige Lagerauge 67 ist entsprechend nach außen gehend durchgezogen. Es ist einem Schlüsselloch vergleichbar. Der Handbetätigungsgriff 72 ist zweckmäßig abziehbar.

Während hier gleichsam von einer axial festgelegten Betätigungswelle 20 ausgegangen wird, läßt sich aber durch deren Axialverlagerung auch eine baulich einfache Variante der Notbetätigung erreichen. Die diesbezügliche Betätigungswelle 20 ist durch eine Feder 73 axial belastet. Dies geschieht auf einen Längenbereich eines Mehrkantabschnitts a. Der befindet sich in Drehmitnahmeverbindung zur Nabe 40 des Abtriebszahnrades 41 des Elektromotors 37. Es liegt die funtionsgerechte Grundstellung vor. Soll nun der Formschluss zwischen den Teilen 20 und 41 aufgehoben werden, also eine Freigabe gegenüber dem Antriebsmittel Elektromotor 37 im Sinne einer Ausklinkung erreicht werden, so wird die Betätigungswelle 20 entgegen der Kraft der Feder 73 nach links gehend verlagert. In den Bereich der Nabe 40 tritt dabei ein Zylinderabschnitt b, der durchmessermäßig unter dem Maß der Schlüsselweite des hexagonalen Abschnitts a der Betätigungswelle 20 liegt. Die Betätigungswelle 20 kann daher, vom selbsthemmenden Einfluss des Elektromotors 37 getrennt, gleichwohl gedreht werden, dies unter Ausübung der oben geschilderten Funktionen über den bzw. die Steuernocken 19. Der rechtsseitig des Zylinderabschnitts b liegende Mehrkantabschnitt c entspricht wiederum dem mit a Bezeichneten. Der Mehrkantabschnitt c kann zum Angriff des Handbetätigungsgriffes 72, der die querschnittsmäßige Entsprechung besitzt, dienen. Hierdurch ist also erreicht, dass die Betätigungswelle 20 über ihre Länge neben einem Eingreifabschnitt, gestellt vom Mehrkantabschnitt a, mit welchem das Verzahnungsgetriebe 38 zusammenwirkt, einen Freigangabschnitt, gebildet vom Zylinderabschnitt b, aufweist und dass die Betätigungswelle 20 in ihrer Längsrichtung relativ zum Verzahnungsgetriebe 38 verschiebbar ist, so dass zur Notbetätigung der Freigangabschnitt, sprich Zylinderabschnitt b, dem Verzahnungsgetriebe 38 zuordbar ist. Nach Ziehen dieses Handbetätigungsgriffes 72 schnellt die Betätigungswelle 20 federbelastet wieder in ihre aus Fig. 13 ersichtliche Grundstellung zurück. Die Anschlagmittel der Betätigungswelle 20 sind nicht dargestellt, da leicht vorstellbar.

Nun zurück zur Grundversion in Aufgriff der bereits angedeuteten elektrotechnischen Ausrüstung: Zugrunde liegt eine sensorgesteuerte elektrische Rollenfeststellung. Untergebracht sind diese Mittel im, dem Elektromotor 37 abgewandten Träger 9 (es sei auf die Fig. 2 und 4 verwiesen). Der auch hier stufen- bzw. schulterbildend abgesetzte Steckvorsprung 10 ist in das in Fig. 1 vorne rechtsseitig liegende Ende des Auslegers 8 eingeführt. Im Inneren des Trägers 9 sitzen die bezüglich der Fig. 6 ff geschilderten Eingerichtteile der Betätigungsvorrichtung B, als Hauptteil der mit 19 bezeichnete Steuernocken. Hier ist der Endbereich der Betätigungswelle 20 nach auswärts hin verlängert. Er ragt in das Innere eines gehäusebildenden Anbaues 74 des betreffenden Trägers 9. Der Anbau 74 liegt auf der dem Steckvorsprung 10 abgewandten Seite des selbst im Grunde würfelförmigen Trägers 9.

Der Anbau 74 ist nach oben und stirnseitig offen, ferner auch bodenseitig, so dass eine Bestückungszugänglichkeit, vor allem stirnseitig und bodenseitig vorliegt. Die stirnseitige Öffnung trägt das Bezugszeichen 75. Die bodenseitige Öffnung ist mit 76 bezeichnet.

Über die stirnseitige Öffnung 75 läßt sich in die Höhlung 77 des Anbaues 74 eine zylindrische Walze 78 zuordnen. Letztere ist auf ganzer Länge einsteckbar. Sie besitzt zentral längsgerichtet gelegen einen durchgehenden Innenquerschnitt 79. Der ist querschnittsmäßig auf den Querschnitt des dortigen Endes der Betätigungswelle 20 abgestimmt. Es liegt also Formschluss vor mit entsprechender Drehmitnahmewirkung. Die axial korrekte Festlegung geschieht zweckmäßig über eine Madenschraube, deren walzenseitige, radial gerichtete Gewindebohrung aus Fig. 4 hervorgeht.

An der Betätigungswelle 20 sind so, mittelbar zugeordnet, umfangsmäßig verteilt an der Walze 78, Positionsgeber 80 angeordnet. Die Positionsgeber 80 sind als Magnete ausgebildet. Die weisen stiftförmige Gestalt auf. Ihre Mittelachsen liegen in Radialen. Zur Aufnahme der Magnete, respektive Positionsgeber 80, weist die Walze 78, zur Mantelwand öffnend, passende Taschen 81 auf.

Insgesamt sind an der Walze 78 drei Positionsgeber 80 angebracht, abdeckend die oben genannten Funktionen, wie Lenkblockierung (vergl. Fig. 6), Freigabestellung (vergl. Fig. 8), Brems- und Lenkblockierung (vergl. Fig. 10). Hierzu reicht ein Gesamt-Drehwinkel der Betätigungswelle 20 bzw. Walze 78 von weniger als 180°. Gemäß dargestelltem Ausführungsbeispiel sind die drei Positionsgeber 80 sogar innerhalb eines Gesamt-Drehwinkels von 90° untergebracht. Das lässt sich noch weiter verringern, z.B. auf 60°.

Die einzelnen Positionsgeber 80 erstrecken sich in Längsrichtung der Betätigungswelle 20, überdies auf axialem Abstand zueinander. Die Winkelabstände zwischen jeweils Positionsgeber 80 betragen beim dargestellten Ausführungsbeispiel im Wesentlichen 45°, wie angedeutet reduzierbar sogar auf 30°. Die spieluhrwalzenartig exponierten Positionsgeber 80 erstrecken sich unter Mitberücksichtigung des axialen Versatzes praktisch auf einer gedachten Wendellinie am Umfang der Walze 78.

Die Detektierungsebene liegt vertikal und schneidet die geometrische Achse der Betätigungswelle 20.

Eine der besagten stirnseitigen Öffnung 75 axial trägerseitig gegenüberliegende Stirnwand 82 stellt bezüglich eines konzentrischen Bundes 83 an der Innenseite der Walze 78 einen axialen Begrenzungsanschlag für die walzenbestückte Betätigungswelle 20.

Ein Anschlag in Gegenrichtung, also gegensinnig wirkend, ergibt sich auf der den Elektromotor 37 aufweisenden Seite der Betätigungswelle 20 durch eine Kappe, mitbildend die oben erwähnte Befestigungsvorrichtung 62. Auf der anderen, dem Träger 9 zugewandten Seite des Elektromotors 37 ist das Getriebegehäuse 46 ein Bund 84 angeformt, vorragend in Richtung des Spaltes 61. Diesem Bund 84 liegt ein Stutzen 85 des dortigen Trägers 9 gegenüber. Die Welle 20 ist axial gesichert.

Zur Detektierung der Schaltpositionen der Betätigungswelle 20 bzw. der geschilderten Rollenfunktionen dienen ortsfeste Positionserfasser 86. Die Positionsgeber 80 treten berührungslos über diese. Die Positionserfasser sind als Näherungsschalter ausgebildet und in einer gemeinsamen Platine 87 untergebracht. Es sei auf Fig. 5 verwiesen. Die Platine 87 ist dort vergrößert wiedergegeben.

Auch die Positionserfasser 86 sind über die Länge der Betätigungswelle 20 mit axialem Abstand zueinander angeordnet. Der entspricht dem der Positionsgeber 80, nur dass Erstere nur axial orientiert linear positioniert sind.

Die in Fig. 5 vergrößert dargestellte Platine 87 wird der mit 76 bezeichneten bodenseitigen Öffnung im Wege des Quereinschubs zugeordnet. Die quer orientierten vertikalen Wandabschnitte der bodenseitigen Öffnung 76 weisen dazu nicht dargestellte Längsnuten auf, welche die korrespondierenden Ränder der Platine 87 führen, respektive fassen. Sicherungsmittel können die Position der Platine 87 betriebskorrekt haltern.

Die Stromversorgung des Steuergeräts 52 geschieht, wie schon angedeutet, durch den Akkumulator 51. Dabei ist schaltungsmäßig berücksichtigt, dass nach erfolgter, über das Schaltgerät auszulösender Betätigung der Rolle 1 das Schaltgerät stets wieder vollständig die Stromverbindung zum Akkumulator 51 unterbricht. Das erweist sich als bedeutend energiesparend. Für die nächstfolgende Funktion, d. h. vor Durchführung einer funktionsbezogenen Betätigung der Rolle 1 vermittels des Schaltgerätes ist stets eine gesonderte Aktivierung der Stromversorgung des Schaltgeräts durchzuführen. Dabei läßt sich jeweils auch die aktuelle Funktion ablesen, so dass der Benutzer gleich vor Augen hat, ob die von ihm gewünschte Funktion nicht schon gewählt ist. Mit Aktivierung der Stromversorgung des Schaltgerätes erfolgt also eine Anzeige des Betätigungszustandes der Rolle 1.

Desweiteren ist vorgesehen, dass die Schalteinheiten des Schaltgerätes/Steuergerätes 52 ebenfalls auf einer gemeinsamen Platine angeordnet sind.

Bei multiplem Einsatz von Elektromotoren 37 ist die Ausgestaltung vorteilhaft so, dass zwei oder mehr Rollen 1 zur gemeinsamen Betätigung vorgesehen sind und dass jeder Rolle 1 eine eigene Betätigungswelle 20 und ein eigener Elektromotor 37 zugeordnet ist. Auch hier folgt die Betätigung der Elektromotoren 37 über eine zentrale Steuereinheit. Die steht mit jedem der Elektromotoren 37 in Wirkverbindung.

Die Bedienungselemente des Steuergeräts 52, gestellt von diversen Tasten, sind auf dessen pultartig abfallender Frontplatte 88 übersichtlich zusammengefasst. Durch Betätigen einer Taste 89 schaltet das Steuergerät 52 in den Bereitschaftsmodus. Der wird durch eine Leuchtdiode 90 (bspw. grün) angezeigt. Über eine andere Taste 91 wird der Bereitschaftsmodus wieder ausgeschaltet. In den Fig. 6 und 7 ist die Lenkblockierung geschaltet. Dazu wird eine Lenkblockierungstaste 92 gedrückt. Dadurch ergibt sich sensorgesteuert die elektrische Richtungsfeststellung. Auch das ist seitlich neben der Lenkblockierungstaste 92 durch eine Leuchtdiode optisch/visuell erkennbar. Die Fig. 8 und 9 zeigen die entsprechend sensorgesteuert erreichte Freigabestellung der Rolle 1. Dazu wird die mit 93 bezeichnete Freigabetaste gedrückt. Eine daneben angeordnete Leuchtdiode macht diese Situation in der genannten Weise erkennbar. Der Steuernocken 19 ist entgegen Uhrzeigersinn bewegt. Der elektrische Stellantrieb fährt in die dargestellte Position.

Die Fig. 10 und 11 geben die Brems- und Lenkblockierung wieder. Zur Erlangung dieses Totatstopps wird die mit 94 bezeichnete Brems- und Lenkblockierungstaste gedrückt. Auch hier erfolgt seitlich die optisch/visuelle Anzeige dieser Funktion.

Die drei beschriebenen Funktionen können im Störfall auch manuell herbeigeführt werden durch die weiter oben detailliert erörterten Maßnahmen. Nach entsprechendem Entsperren des Elektromotors 37 kann dieser unter Durchlaufen der jeweiligen Schaltschritte aus seiner horizontalen, freikragenden Erstreckung in eine Winkelhalbierende zur Vertikalen gebracht werden und von da aus in eine vertikale.

Wie den Fig. 1 und auch 6 ff entnehmbar, liegt der für die Schwenkbetätigung notwendige Freiraum vor durch einen ausreichenden vertikalen Unterflurbereich 14. Selbst eine anderssinnige Schwenkbewegung, also im Uhrzeigersinn, ist möglich, da zwischen der Oberseite des Untergestells 2 und der Unterseite des Bettrahmens 5 ein ausreichender Freiraum zufolge des mit 15 bezeichneten Überbaus besteht.

Im Hinblick auf den Akkumulator 51 bleibt noch festzuhalten, dass dieser einen An/Aus-Kippschalter aufweist, ferner eine kapazitive Ladeanzeige und einen Anschluss für einen Netzstecker, so dass auch hierüber die Versorgung des Steuergeräts erfolgen kann.

Die Elektrik arbeitet äußerst wirtschaftlich, da das Steuergerät nach jeder neu eingestellten Funktion abschaltet.

## Patentansprüche

1. Rolle (1), insbesondere Lenkrolle, mit einer Feststellbarkeit der Drehbewegung des Laufrades (12) und gegebenenfalls der Schwenkbewegung des Laufrades (12), mit einer einen Steuernocken (19) der Rolle (1) durchsetzenden Betätigungswelle (20), auf welche zur Betätigung ein Elektromotor (37) über ein Getriebe einwirkt, **dadurch gekennzeichnet, dass** der Elektromotor (37) vermittels einer Elektromotor-Welle (39) über ein Verzahnungsgetriebe (38) auf die Betätigungswelle (20) einwirkt, wobei das Verzahnungsgetriebe (38) ein Abtriebszahnrad (41) aufweist, dessen Nabe (40) von der Betätigungswelle (20) durchsetzt ist.

2. Rolle nach Anspruch 1, **dadurch gekennzeichnet, dass** die Betätigungswelle (20) einen Mehrkantquerschnitt aufweist.

3. Rolle nach Anspruch 2, **dadurch gekennzeichnet, dass** die Nabe (40) einen an den Mehrkantquerschnitt der Betätigungswelle (20) angepassten Innenquerschnitt (42) aufweist.

4. Rolle nach einem der Ansprüche 1 bis 3, **dadurch gekennzeichnet, dass** das Verzahnungsgetriebe (38) eine Schnecke (43) aufweist, welche über untersetzende Zwischenzahnräder (44) das Abtriebszahnrad (41) treibt.

5. Rolle nach Anspruch 4, **dadurch gekennzeichnet, dass** die Drehachse (48) der Schnecke (43) mit der Drehachse (49) der Elektromotor-Welle (39) fluchtet.

6. Rolle nach einem der Ansprüche 1 bis 5, **dadurch gekennzeichnet, dass** die Betätigungswelle (20) relativ zur Nabe (40) in Längsrichtung der Betätigungswelle (20) des Abtriebszahnrades (41) verschiebbar ist.

7. Rolle nach einem der Ansprüche 1 bis 6, **dadurch gekennzeichnet, dass** zwei oder mehr Rollen (1) zur gemeinsamen Betätigung vorgesehen sind und dass jeder Rolle (1) eine eigene Betätigungswelle (20) und ein eigener Elektromotor (37) zugeordnet ist, wobei die Betätigung der Elektromotoren (37) über eine zentrale Steuereinheit erfolgt, die mit jedem der Elektromotoren (37) in Wirkverbindung steht.

8. Rolle nach einem der Ansprüche 1 bis 6, **dadurch gekennzeichnet, dass** die Betätigungswelle (20) die Steuernocken (19) von zwei distanziert zueinander angeordneten Rollen (1) durchsetzt.

9. Rolle nach Anspruch 8, **dadurch gekennzeichnet, dass** zwei Betätigungswellen (20) parallel zueinander angeordnet sind, die über ein Getriebe (68) zur gleichzeitigen Schaltbetätigung von drei oder mehr Rollen (1) durch einen Elektromotor (37) gekoppelt sind.

10. Rolle nach einem der Ansprüche 1 bis 9, **dadurch gekennzeichnet, dass** der feststehende Elektromotor (37) eine sich rechtwinklig zur Ebene der Betätigungswelle (20) erstreckende Elektromotor-Welle (39) aufweist.

11. Rolle nach einem der Ansprüche 1 bis 10, **dadurch gekennzeichnet, dass** der feststehende Elektromotor (37) eine sich rechtwinklig in oder unterhalb der Ebene der Betätigungswelle (20) erstreckende Elektromotor-Welle (39) aufweist.

12. Rolle nach einem der Ansprüche 1 bis 11, **dadurch gekennzeichnet, dass** der Wickelbereich (50) des Elektromotors (37) in Handbreitenabstand zu der Betätigungswelle (20) angeordnet ist.

13. Rolle nach Anspruch 12, **dadurch gekennzeichnet, dass** ein in den Wickelbereich (50) übergehendes Gehäuse (47) des Elektromotors (37) freikragend griffartig ausgebildet ist.

14. Rolle nach einem der Ansprüche 1 bis 13, **dadurch gekennzeichnet, dass** der Elektromotor (37) einem Stirnende der Betätigungswelle (20) zugeordnet ist.

15. Rolle nach einem der Ansprüche 1 bis 14, **dadurch gekennzeichnet, dass** der Elektromotor (37) bezüglich bspw. einer Anordnung in einem Krankenbett (3) bettaußenseitig zu einer Rolle (1) angeordnet ist.

16. Rolle nach einem der Ansprüche 1 bis 14, **dadurch gekennzeichnet, dass** der Elektromotor (37) bezüglich bspw. einer Anordnung in einem Krankenbett (3) bettinnenseitig zu einer Rolle (1) angeordnet ist.

17. Rolle nach einem der Ansprüche 1 bis 16, **dadurch gekennzeichnet, dass** der Elektromotor (37) zur Notbetätigung mit der Betätigungswelle (20) drehbar angeordnet ist.

18. Rolle nach einem der Ansprüche 1 bis 17, **dadurch gekennzeichnet, dass** das Verzahnungsgetriebe (38) des Elektromotors (37) selbsthemmend ist.

19. Rolle nach einem der Ansprüche 1 bis 18, **dadurch gekennzeichnet, dass** zur Festlagerung ein in einer Festlagerbohrung (58) eingreifender Federstift (54) vorgesehen ist.

20. Rolle nach Anspruch 19, **dadurch gekennzeichnet, dass** zur Notbetätigung eine Festlagerung des Elektromotors (37) aufhebbar ist.

21. Rolle nach einem der Ansprüche 1 bis 20, **dadurch gekennzeichnet, dass** an der Betätigungswelle (20), umfangsmäßig verteilt, Positionsgeber (80) angeordnet sind, die berührungslos über einen oder mehrere Positionserfasser (86) zur Detektierung einer Schaltposition der Betätigungswelle (20) treten.

22. Rolle nach Anspruch 21, **dadurch gekennzeichnet, dass** die Positionsgeber (80) als Magnet ausgebildet sind.

23. Rolle nach Anspruch 21 oder 22, **dadurch gekennzeichnet, dass** ein Positionserfasser (86) als Näherungsschalter ausgebildet ist.

24. Rolle nach einem der Ansprüche 21 bis 23, **dadurch gekennzeichnet, dass** die Positionserfasser (86) in einer gemeinsamen Platine (87) untergebracht sind.

25. Rolle nach einem der Ansprüche 21 bis 24, **dadurch gekennzeichnet, dass** drei Positionsgeber (80) vorgesehen sind und diese innerhalb eines Umfangsbereichs, abdeckend den gesamten Drehwinkel von 180° oder weniger, angeordnet sind.

26. Rolle nach einem der Ansprüche 21 bis 25, **dadurch gekennzeichnet, dass** die Positionsgeber (80) über die Länge der Betätigungswelle (20) mit Abstand zueinander angeordnet sind.

27. Rolle nach einem der Ansprüche 21 bis 26, **dadurch gekennzeichnet, dass** die drei Positionsgeber (80) innerhalb eines Umfangsbereichs von 60° angeordnet sind.

28. Rolle nach einem Ansprüche 1 bis 27, **dadurch gekennzeichnet, dass** die Betätigungswelle (20) über ihre Länge neben einem Eingreifabschnitt, mit welchem das Verzahnungsgetriebe (38) zusammenwirkt, einen Freigangabschnitt aufweist und dass die Betätigungswelle (20) in ihrer Längsrichtung relativ zu dem Verzahnungsgetriebe (38) verschiebbar ist, so dass zur Notbetätigung der Freigangabschnitt dem Verzahnungsgetriebe (38) zuordbar ist.

29. Rolle nach einem der Ansprüche 1 bis 28, **dadurch gekennzeichnet, dass** ein Stirnende der Betätigungswelle (20) mit einem Handbetätigungsgriff (72) ausgestattet ist.

30. Rolle nach Anspruch 29, **dadurch gekennzeichnet, dass** die Betätigungswelle (20) vermittels des Handbetätigungsgriffes (72) gegen Federkraft axial bewegbar ist.

31. Rolle nach einem der Ansprüche 1 bis 30, wobei weiter ein Steuergerät (52) und ein Akkumulator (51) vorgesehen sind, **dadurch gekennzeichnet, dass** die Stromversorgung des Steuergerätes (52) durch den Akkumulator (51) schaltbar ist und dass nach erfolgter, über das Schaltgerät auszulösender Betätigung der Rolle (1) das Schaltgerät vollständig die Stromverbindung zum Akkumulator (51) unterbricht.

32. Rolle nach Anspruch 31, **dadurch gekennzeichnet, dass** vor Durchführung einer Betätigung der Rolle (1) vermittels des Schaltgerätes eine gesonderte Aktivierung der Stromversorgung des Schaltgerätes durchzuführen ist.

33. Rolle nach Anspruch 32, **dadurch gekennzeichnet, dass** mit Aktivierung der Stromversorgung des Schaltgerätes eine Anzeige des Betätigungszustandes der Rolle (1) erfolgt.

34. Rolle nach einem der Ansprüche 31 bis 33, **dadurch gekennzeichnet, dass** die Schalteinheiten des Schaltgerätes auf einer gemeinsamen Platine angeordnet sind, welche Schaltplatine gegebenenfalls auch in eine vorhandene Schalteinheit des Krankenbettes (3) integrierbar ist.

35. Rolle nach einem der Ansprüche 21 bis 34, **dadurch gekennzeichnet, dass** die Positionserfasser (86) über die Länge der Betätigungswelle (20) mit Abstand zueinander angeordnet sind.

## Claims

1. A roller (1), in particular a castor-type roller, with the rotational movement of the running wheel (12) and optionally the pivoting movement of the running wheel (12) being fixable, with an operating shaft (20) which passes through a control cam (19) of the roller (1) and on which an electric motor (37) acts via a gear mechanism to operate it, **characterized in that** the electric motor (37) acts on the operating shaft (20) by means of an electric motor shaft (39) via a toothed gear mechanism (38), the toothed gear mechanism (38) having a driven gear wheel (41), the hub (40) of which is passed through by the operating shaft (20).

2. A roller according to Claim 1, **characterized in that** the operating shaft (20) has a polygonal cross-section.

3. A roller according to Claim 2, **characterized in that** the hub (40) has an internal cross-section (42) that is adapted to the polygonal cross-section of the operating shaft (20).

4. A roller according to one of Claims 1 to 3, **characterized in that** the toothed gear mechanism (38) has a worm (43), which drives the driven gear wheel (41) via step-down intermediate gear wheels (44).

5. A roller according to Claim 4, **characterized in that** the axis of rotation (48) of the worm (43) is in line with the axis of rotation (49) of the electric motor shaft (39).

6. A roller according to one of Claims 1 to 5, **characterized in that** the operating shaft (20) is displaceable in relation to the hub (40) in the longitudinal direction of the operating shaft (20) of the driven gear wheel (41).

7. A roller according to one of Claims 1 to 6, **characterized in that** two or more rollers (1) are intended for joint operation and **in that** each roller (1) has an associated operating shaft (20) of its own and an associated electric motor (37) of its own, the operating of the electric motors (37) taking place via a central control unit, which is in operative connection with each of the electric motors (37).

8. A roller according to one of Claims 1 to 6, **characterized in that** the operating shaft (20) passes through the control cams (19) of two rollers (1) disposed at a distance from each other.

9. A roller according to Claim 8, **characterized in that** two operating shafts (20) are disposed parallel to each other and are coupled by means of a drive mechanism (68) for the simultaneous switching operation of three or more rollers (1) by one electric motor (37).

10. A roller according to one of Claims 1 to 9, **characterized in that** the fixed electric motor (37) has an electric motor shaft (39) extending at right angles to the plane of the operating shaft (20).

11. A roller according to one of Claims 1 to 10, **characterized in that** the fixed electric motor (37) has an electric motor shaft (39) extending at right angles in or below the plane of the operating shaft (20).

12. A roller according to one of Claims 1 to 11, **characterized in that** the angular range (50) of the electric motor (37) is disposed a handwidth away from the operating shaft (20).

13. A roller according to Claim 12, **characterized in that** a casing (47) of the electric motor (37) going over into the winding region (50) is formed such that it projects freely in the manner of a handle.

14. A roller according to one of Claims 1 to 13, **characterized in that** the electric motor (37) is associated with an extreme end of the operating shaft (20).

15. A roller according to one of Claims 1 to 14, **characterized in that** the electric motor (37) is disposed, for example with respect to an arrangement in a hospital bed (3), on the outside of the bed in relation to a roller (1).

16. A roller according to one of Claims 1 to 14, **characterized in that** the electric motor (37) is disposed, for example with respect to an arrangement in a hospital bed (3), on the inside of the bed in relation to a roller (1).

17. A roller according to one of Claims 1 to 16, **characterized in that** the electric motor (37) is disposed rotatably with the operating shaft for emergency operation.

18. A roller according to one of Claims 1 to 17, **characterized in that** the toothed gear mechanism (38) of the electric motor (37) is self-locking.

19. A roller according to one of Claims 1 to 18, **characterized in that** a spring pin (54) engaging in a fixed bearing bore (58) is provided for fixed mounting.

20. A roller according to Claim 19, **characterized in that** secure mounting of the electric motor (37) can be relinquished for emergency operation.

21. A roller according to one of Claims 1 to 20, **characterized in that** on the operating shaft (20) there are disposed circumferentially distributed position indicators (80), which pass contactlessly over one or more position sensor(s) (86) for detecting a switching position of the operating shaft (20).

22. A roller according to Claim 21, **characterized in that** the position indicators (80) are formed as a magnet.

23. A roller according to Claim 21 or 22, **characterized in that** a position sensor (86) is formed as a proximity switch.

24. A roller according to one of Claims 21 to 23, **characterized in that** the position sensors (86) are accommodated in a common circuit board (87).

25. A roller according to one of Claims 21 to 24, **characterized in that** three position indicators (80) are provided and they are disposed within a circumferential range, covering the entire turning angle, of 180° or less.

26. A roller according to one of Claims 21 to 25, **characterized in that** the position indicators (80) are disposed with a spacing from one another over the length of the operating shaft (20).

27. A roller according to one of Claims 21 to 26, **characterized in that** the three position indicators (80) are disposed within a circumferential range of 60°.

28. A roller according to one of Claims 1 to 27, **characterized in that** the operating shaft (20) has over its length not only an engaging portion, with which the toothed gear mechanism (38) interacts, but also a release portion and **in that** the operating shaft (20) is displaceable in its longitudinal direction in relation to the toothed gear mechanism (38), so that, for emergency operation, the release portion can be brought into association with the toothed gear mechanism (38).

29. A roller according to one of Claims 1 to 28, **characterized in that** an extreme end of the operating shaft (20) is provided with a manual operating handle (72).

30. A roller according to Claim 29, **characterized in that** the operating shaft (20) is axially movable against spring force by means of the manual operating handle (72).

31. A roller according to one of Claims 1 to 30, a control device (52) and a storage battery (51) also being provided, **characterized in that** the power supply to the control device (52) is switchable by the storage battery (51) and **in that**, following operation of the roller (1), to be triggered by means of the switching device, the switching device completely interrupts the power connection to the storage battery (51).

32. A roller according to Claim 31, **characterized in that**, before carrying out an operation of the roller (1) by means of the switching device, separate activation of the power supply of the switching device has to be carried out.

33. A roller according to Claim 32, **characterized in that**, with activation of the power supply to the switching device, an indication of the operating state of the roller (1) takes place.

34. A roller according to one of Claims 31 to 33, **characterized in that** the switching units of the switching device are disposed on a common circuit board, which switching circuit board can also, optionally, be integrated into an existing switching unit of the hospital bed (3).

35. A roller according to one of Claims 21 to 34, **characterized in that** the position sensors (86) are disposed with a spacing from one another over the length of the operating shaft (20).

## Revendications

1. Galet (1), en particulier galet directeur, avec une possibilité de blocage du mouvement rotatif de la roue mobile ou de roulement (12) et le cas échéant du mouvement de pivotement de la roue mobile (12) avec un arbre d'actionnement (20) traversant une came de commande (19) du galet (1), arbre sur lequel un moteur électrique (37) agit, par l'intermédiaire d'une transmission, pour provoquer l'actionnement, **caractérisé en ce que** le moteur électrique (37) agit sur l'arbre d'actionnement (20) au moyen d'un arbre de moteur électrique (39) par l'intermédiaire d'une transmission à denture (38), la transmission à denture (38) comportant une roue dentée menée (41), dont le moyeu (40) est traversé par l'arbre d'actionnement (20).

2. Galet selon la revendication 1, **caractérisé en ce que** l'arbre d'actionnement (20) présente une section transversale polygonale.

3. Galet selon la revendication 2, **caractérisé en ce que** le moyeu (40) présente une section transversale intérieure (42), adaptée à la section transversale polygonale de l'arbre d'actionnement (20).

4. Galet selon l'une des revendications 1 à 3, **caractérisé en ce que** la transmission à denture (38) comporte une vis (43), entraînant la roue dentée menée (41) par l'intermédiaire de roues dentées intermédiaires (44) à fonction de démultiplication.

5. Galet selon la revendication 4, **caractérisé en ce que** l'axe de rotation (48) de la vis (43) est aligné sur l'axe de rotation (49) de l'arbre de moteur électrique (39).

6. Galet selon l'une des revendications 1 à 5, **caractérisé en ce que** l'arbre d'actionnement (20) est déplaçable par rapport au moyeu (40) dans la direction longitudinale de l'arbre d'actionnement (20) de la roue dentée menée (41).

7. Galet selon l'une des revendications 1 à 6, **caractérisé en ce que** deux galets (1) ou plus sont prévus pour un actionnement commun et **en ce qu'**à chaque galet (1) est associé un arbre d'actionnement (20) propre et un moteur électrique (37) propre, l'actionnement des moteurs électriques (37) étant réalisé via une unité de commande centrale reliée fonctionnellement à chacun des moteurs électriques (37).

8. Galet selon l'une des revendications 1 à 6, **caractérisé en ce que** l'arbre d'actionnement (20) traverse les cames de commande (19) de deux galets (1) disposés à distance l'un de l'autre.

9. Galet selon la revendication 8, **caractérisé en ce que** deux arbres d'actionnement (20) sont disposés parallèlement l'un à l'autre, en étant couplés par l'intermédiaire d'une transmission (68), pour produire un actionnement de manoeuvre simultanée de deux ou trois galets (1) par un moteur électrique (37).

10. Galet selon l'une des revendications 1 à 9, **caractérisé en ce que** le moteur électrique (37) fixe présente un arbre de moteur électrique (39), s'étendant à angle droit par rapport au plan de l'arbre d'actionnement (20).

11. Galet selon l'une des revendications 1 à 10, **caractérisé en ce que** le moteur électrique (37) fixe comporte un arbre de moteur électrique (39) s'étendant à angle droit par rapport dans ou au-dessous du plan de l'arbre d'actionnement (20).

12. Galet selon l'une des revendications 1 à 11, **caractérisé en ce que** la zone de bobinage (50) du moteur électrique (37) est disposée à distance de la largeur d'une main, par rapport à l'arbre d'actionnement (20).

13. Galet selon la revendication 12, **caractérisé en ce qu'**un boîtier ou carcasse (47) du moteur électrique (37), se prolongeant dans la zone de bobinage (50), est réalisé à la façon d'une poignée, en porte à faux.

14. Galet selon l'une des revendications 1 à 13, **caractérisé en ce que** le moteur électrique (37) est associé à une extrémité frontale de l'arbre d'actionnement (20).

15. Galet selon l'une des revendications 1 à 14, **caractérisé en ce que** le moteur électrique (37) est disposé du côté extérieur du lit par rapport à un galet (1), par rapport, par exemple, à un agencement dans un lit de malade (3).

16. Galet selon l'une des revendications 1 à 14, **caractérisé en ce que** le moteur électrique (37) est disposé du côté intérieur du lit par rapport à un galet (1), par rapport, par exemple, à un agencement dans un lit de malade (3).

17. Galet selon l'une des revendications 1 à 16, **caractérisé en ce que** le moteur électrique (37) est disposé de façon à pouvoir tourner avec l'arbre d'actionnement (20) pour un actionnement de secours.

18. Galet selon l'une des revendications 1 à 17, **caractérisé en ce que** la transmission à denture (38) du moteur électrique (37) est auto-bloquante.

19. Galet selon l'une des revendications 1 à 18, **caractérisé en ce qu'**une tige élastique (54), s'engageant dans un perçage de palier fixe (58), est prévue pour assurer le montage en position fixe.

20. Galet selon la revendication 19, **caractérisé en ce qu'**un montage en position fixe du moteur électrique (37) peut être supprimée pour l'actionnement de secours.

21. Galet selon l'une des revendications 1 à 20, **caractérisé en ce que** des capteurs de position (80) sont disposés, répartis en périphérie, sur l'arbre d'actionnement (20) et agissent sans contact, par l'intermédiaire d'un ou plusieurs détecteurs de position (86), pour détecter la position de manoeuvre de l'arbre d'actionnement (20).

22. Galet selon la revendication 21, **caractérisé en ce que** les capteurs de position (80) sont réalisés sous forme d'aimants.

23. Galet selon la revendication 21 ou 22, **caractérisé en ce qu'**un détecteur de position (86) est réalisé sous la forme d'interrupteur de proximité.

24. Galet selon l'une des revendications 21 à 23, **caractérisé en ce que** les détecteurs de position (86) sont logés dans une platine (87) commune.

25. Galet selon l'une des revendications 21 à 24, **caractérisé en ce que** trois capteurs de position (80) sont prévus, et ceux-ci sont disposés à l'intérieur d'une plage angulaire, en couvrant l'angle de rotation global de 180° ou moins.

26. Galet selon l'une des revendications 21 à 25, **caractérisé en ce que** les capteurs de position (80) sont disposés les uns par rapport aux autres à distance, sur la longueur de l'arbre d'actionnement (20).

27. Galet selon l'une des revendications 21 à 26, **caractérisé en ce que** les trois capteurs de position (80) sont disposés dans une plage angulaire de 60°.

28. Galet selon l'une des revendications 1 à 27, **caractérisé en ce que** l'arbre d'actionnement (20) présente, sur sa longueur, outre un tronçon d'engagement avec lequel coopère la transmission à denture (38), un tronçon à mouvement libre, et **en ce que** l'arbre d'actionnement (20) est déplaçable dans sa direction longitudinale par rapport à la transmission à denture (38), de manière que le tronçon à mouvement libre puisse être associé à la transmission à denture (38), pour permettre un actionnement de secours.

29. Galet selon l'une des revendications 1 à 28, **caractérisé en ce qu'**une extrémité frontale de l'arbre d'actionnement (20) est équipée d'une poignée d'actionnement manuel (72).

30. Galet selon la revendication 29, **caractérisé en ce que** l'arbre d'actionnement (20) est déplaçable axialement, à l'encontre de la force d'un ressort, au moyen de la poignée d'actionnement manuel (72).

31. Galet selon l'une des revendications 1 à 30, dans lequel sont prévus en outre un appareil de commande (52) et un accumulateur (51), **caractérisé en ce que** l'alimentation électrique de l'appareil de commande (52) au moyen de l'accumulateur (51) peut être commutée, et **en ce que**, après avoir effectué un actionnement, déclenchant par l'intermédiaire de l'appareil de commutation, du galet (11), l'appareil de commutation interrompt complètement la liaison électrique vers l'accumulateur (51).

32. Galet selon la revendication 31, **caractérisé en ce que**, avant d'accomplir un actionnement du galet (1) au moyen de l'appareil de commutation, il faut effectuer une activation séparée de l'alimentation électrique de l'appareil de commutation.

33. Galet selon la revendication 32, **caractérisé en ce qu'**un affichage de l'état d'actionnement du galet (1) est effectué avec l'activation de l'alimentation électrique de l'appareil de commutation.

34. Galet selon l'une des revendications 31 à 33, **caractérisé en ce que** les unités de commutation de l'appareil de commutation sont disposées sur une platine commune, ladite platine pouvant, le cas échéant, également être intégrée dans une unité de commutation existante du lit de malade (3).

35. Galet selon l'une des revendications 21 à 34, **caractérisé en ce que** les détecteurs de position (86) sont disposés à distance les uns des autres, sur la longueur de l'arbre d'actionnement (20).
